Europäisches Patentamt

European Patent Office

Office européen des brevets

(19)

(11) Veröffentlichungsnummer : **0 076 399**
**B1**

# (12) EUROPÄISCHE PATENTSCHRIFT

(45) Veröffentlichungstag der Patentschrift :
28.05.86

(21) Anmeldenummer : 82108490.2

(22) Anmeldetag : 15.09.82

(51) Int. Cl.⁴ : **B 60 C 11/10**

(54) **Laufflächengestaltung für Fahrzeugluftreifen.**

(30) Priorität : 02.10.81 DE 3139256

(43) Veröffentlichungstag der Anmeldung :
13.04.83 Patentblatt 83/15

(45) Bekanntmachung des Hinweises auf die Patenterteilung : 28.05.86 Patentblatt 86/22

(84) Benannte Vertragsstaaten :
AT BE CH DE FR GB IT LI NL SE

(56) Entgegenhaltungen :
EP-A- 0 075 111
CH-A- 207 158
DE-A- 2 933 485
FR-A- 798 205
FR-A- 2 496 562
GB-A- 290 853
GB-A- 546 975
US-A- 1 377 283
US-A- 2 119 557

(73) Patentinhaber : **Continental Gummi-Werke Aktiengesellschaft
Königsworther Platz 1
D-3000 Hannover 1 (DE)**

(72) Erfinder : **Seitz, Hans, Dr. Dipl.-Ing.
Grafenbergerstrasse 5 b
D-3012 Langenhagen 1 (DE)**
Erfinder : **Rach, Heinz-Dieter
Planetenring 32
D-3008 Garbsen 1 (DE)**
Erfinder : **Pieper, Henner
Bahnhofstrasse 2 B
D-3012 Langenhagen 1 (DE)**
Erfinder : **Frerichs, Udo
Buchenweg 7
D-3012 Langenhagen 8 (DE)**

EP 0 076 399 B1

## Beschreibung

Die Erfindung geht aus von einer Laufflächengestaltung für Fahrzeugluftreifen für Reserveräder, mit in großer Anzahl in Reifenumfangsrichtung nebeneinander und hintereinander angeordneten Ausnehmungen, die quer zur Reifenumfangsrichtung verlaufen, und mit Querstegen und Umfangsstegen, die die Ausnehmungen voneinander trennen und eine Breite aufweisen, die etwa 1/4 bis 3/4 der Umfangserstreckung der benachbarten Ausnehmungen entspricht, bei der weiterhin die Ausnehmungen einen Grundriss aufweisen, bei dem zumindest eine Begrenzungslinie von einer Kante eines Querstegs gebildet wird, und wobei die radial außenliegende Umfangsfläche des Reifens in mehrere in Umfangsrichtung aufeinanderfolgende Abschnitte unterteilt ist, innerhalb eines jeden Abschnitts die Umfangserstreckung der Ausnehmungen und der Querstege konstant ist und bei den aufeinanderfolgenden Abschnitten die Umfangserstreckung der Ausnehmungen und der Querstege unterschiedlich gewählt ist. Eine derartige Laufflächengestaltung gehört zum Stand der Technik nach Art. 54 (3) (vgl. EP-A-75111 veröffentlicht am 30.03.83).

Eine solche Laufflächengestaltung ist für Reserveifen für PKW gewählt worden, um ein geräuschvolles Abrollen des Reifens auf der Straße zu erzielen und um das Gewicht von Reservereifen zu reduzieren.

Bei der obigen Laufflächengestaltung ist man ausschließlich auf die Verwendung von Ausnehmungen mit etwa rechteckförmigem oder quadratischem Grundriß angewiesen.

Der Erfindung liegt deshalb die Aufgabe zugrunde, eine Laufflächengestaltung anzugeben, die bei Beibehaltung der Vorteile der obigen Laufflächengestaltung auch die Verwendung von Ausnehmungen mit anderen Grundrißformen gestattet.

Diese Aufgabe wird erfindungsgemäß dadurch gelöst, daß die Umfangsstege zumindest teilweise von schräg verlaufenden Stegen gebildet sind.

Die Erfindung geht aus von der Erkenntnis, daß es zur Erzielung einer hohen Geräuschabgabe und insbesondere zur Erhaltung eines Anteils von Tönen, die sehr eindringlich auf das Ohr eines Fahrers einwirken, darauf ankommt, bestimmte Elemente einer Laufflächengestaltung mit anderen Elementen auf definierte Weise zusammenwirkenzulassen. So sind vorliegend die Querstege unverzichtbar, die durch nebeneinanderliegende Ausnehmungen voneinander getrennt sind.

Weiterhin muß die Umfangserstreckung der Querstege und der benachbarten Ausnehmungen aufeinander abgestimmt sein.

Schließlich müssen die Umfangserstreckungen der Querstege und Ausnehmungen unterschiedlicher Umfangsabschnitte des Reifens in einem bestimmten Verhältnis zueinander stehen, das nicht 1 : 1 beträgt.

Diese Forderungen lassen sich nicht nur mit Ausnehmungen erzielen, die einen rechteckigen oder nahezu rechteckigen Grundriß aufweisen, sondern auch mit anderen.

Den möglichen Formen der Ausnehmungen ist gemeinsam, daß zumindest eine ihrer Begrenzungslinien von der Kante eines Querstegs gebildet wird. Bevorzugte Ausnehmungen sind solche mit trapezförmigem oder parallelogrammförmigen Grundriß.

Vorteilhafte Ausgestaltungen der Erfindung sind den weiteren Unteransprüchen zu entnehmen.

Nachfolgend werden mehrere Ausführungsbeispiele der Erfindung beschrieben und teilweise anhand einer Zeichnung erläutert.

Es zeigt

Figur 1 eine Teildraufsicht auf eine äußere Umfangsfläche eines Reservereifens für Straßenfahrzeuge (schematisch), gemäß der älteren Patentanmeldung EP-A-75111,

Figur 2 einen Teilschnitt des Reifens in einer Ebene senkrecht zur Axialrichtung auf der Linie II - II der Fig. 1,

Figur 3 und 4 eine Teildraufsicht auf eine äußere Umfangsfläche eines Reservereifens mit trapezförmigen Ausnehmungen,

Figur 5 eine Teildraufsicht auf eine äußere Umfangsfläche eines Reservereifens mit parallelogrammförmigen Ausnehmungen.

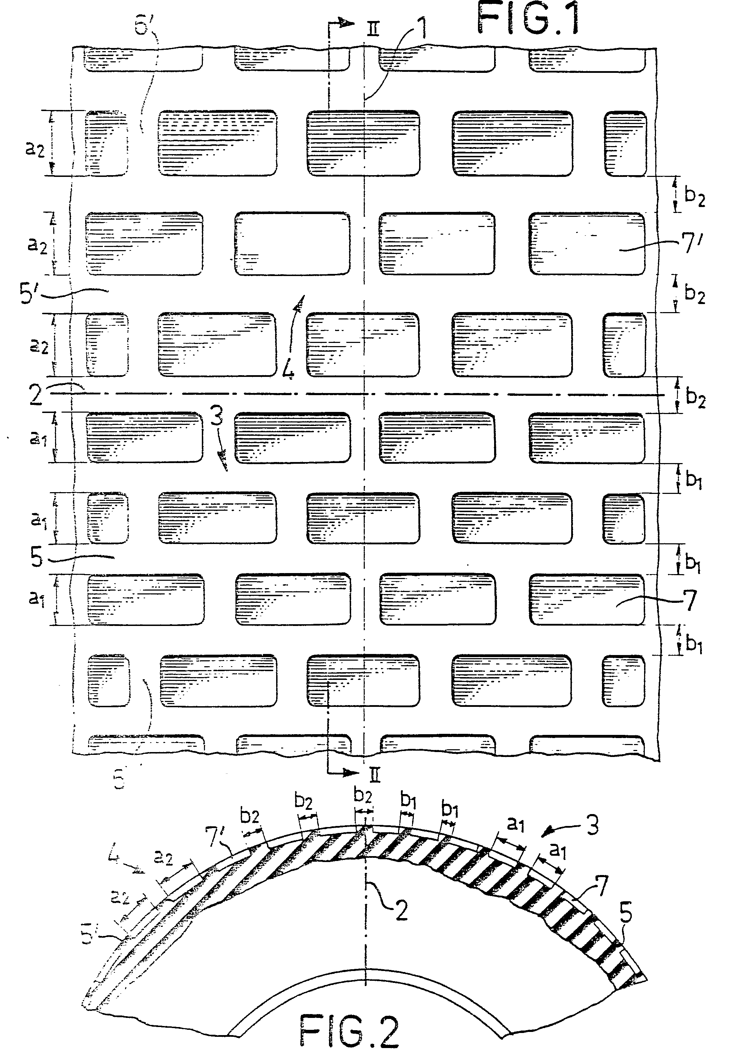

Um die Weiterbildungen gemäß vorliegender Erfindung besser verstehen zu können, wird zunächst anhand der Fig. 1 und 2 eine Ausführung beschrieben, wie sie in der älteren Patentanmeldung EP-A-75111 vorgeschlagen worden ist.

Die Mitte des Laufstreifens mit der Laufflächengestaltung ist durch eine Linie 1 aufgezeigt, die gleichzeitig die Reifenumfangsrichtung wiedergibt.

Mittels einer in Axialrichtung verlaufenden Linie 2 ist eine Unterteilung der äußeren Reifenumfangsfläche in mehrere Abschnitte, vorliegend in zwei gleich lange Abschnitte 3, 4, also in zwei Hälften angedeutet.

Im ersten Abschnitt 3 besteht das Laufflächenprofil im wesentlichen aus von einem Laufflächenrand zum anderen Laufflächenrand durchlaufend und ununterbrochen sich erstreckenden Querstegen 5, die über kurze, sich in Umfangsrichtung erstreckende Umfangsstege 6 verbunden sind, und zwar in der Weise, daß die Stege 6 für aufeinanderfolgende Querstegpaare gegeneinander versetzt sind.

Die Stege 5, 6 begrenzen im wesentlichen querverlaufende rechteckige Ausnehmungen 7 mit der Breite $a_1$, die aufgrund der Stege 5, 6 bei satter Auflage auf der Fahrbahn zellenartige Einschließungen bilden. Die Breite $b_1$ der Querstege 5 liegt etwas über der halben Umfangserstreckung der Ausnehmungen 7 bzw. dem halben gegenseitigen Abstand der Querstege 5. Diese Bemessung kann auch für die Umfangsstege 6 zutreffen, die jedoch um das vierfache Maß der Stegbreite auf gegenseitiger Entfernung stehen.

Im zweiten Abschnitt 4 der Lauffläche ist die Laufflächengestaltung ähnlich ausgebildet wie im ersten. Dabei ist « ähnlich » zumindest hinsichtlich der Breiten der Querstege 5, 5' und der Ausnehmungen 7, 7' im geometrischen Sinn zu verstehen, d. h. es gilt $a_1 : a_2 = b_1 : b_2$, wenn man mit $a_2$ die Breite einer Vertiefung 7' und mit $b_2$ die eines Querstegs 5' im zweiten Abschnitt 4 der Lauffläche bezeichnet. Im vorliegenden Beispiel hat das Verhältnis $a_1 : a_2$ den Wert 4/5.

Innerhalb eines jeden Abschnitts 3, 4 haben die Ausnehmungen 7, 7', Querstege 5, 5' und Umfangsstege 6, 6' gleiche Abmessungen, während die Profiltiefe für beide Abschnitte gemeinsam ca. 4 mm beträgt.

Außer dem im Ausführungsbeispiel beschriebenen Fall kann die Umfangsfläche auch in mehr als zwei Abschnitte unterteilt sein, und es kann bei zwei Abschnitten auch günstig sein, unterschiedliche Längen für die beiden Abschnitte zu wählen. In jedem Fall sollte zumindest einer der Abschnitte bevorzugt eine Länge von 25 % bis 75 % der gesamten Umfangslänge aufweisen.

Bei der Wahl von zwei bzw. vier Abschnitten und Ausnehmungen 7, 7' und Querstegen 5, 5' mit zwei unterschiedlichen Breiten $a_1$, $a_2$ bzw. $b_1$, $b_2$ sollten die Breitenverhältnisse $a_1 : a_2$ bzw. $b_1 : b_2$ zwischen 6 : 10 und 9 : 10 betragen.

Es ist jedoch nicht ausgeschlossen, die Reifenumfangsfläche z. B. in drei Abschnitte mit von Abschnitt zu Abschnitt unterschiedlichen Breiten für die Ausnehmungen und die Stege zu unterteilen, jedoch sollten auch in diesem Fall die unterschiedlichen Vertiefungen und Querstege geometrisch ähnlich sein.

Es ist anzumerken, daß die Laufflächengestaltung, nicht zuletzt aufgrund der geringen Profiltiefe, hervorragend sowohl bei Radialreifen als auch bei Diagonalreifen eingesetzt werden kann.

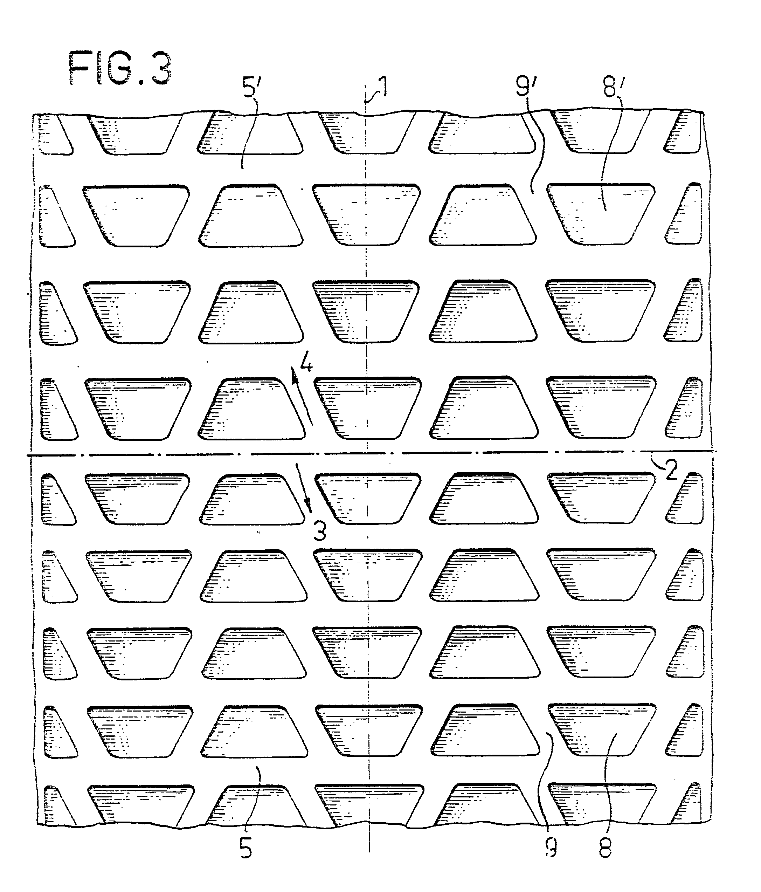

Nachfolgend wird ein erstes erfindungsgemäßes Ausführungsbeispiel gemäß Fig. 3 beschrieben.

Es unterscheidet sich von der Ausführung der Fig. 1 dadurch, daß die Ausnehmungen 7, 7' mit rechteckförmigem Grundriß durch Ausnehmungen 8, 8' mit trapezförmigem Grundriß ersetzt sind. Dies hat zwangsläufig zur Folge, daß die Umfangsstege 6, 6' von schräg verlaufenden Stegen 9, 9' gebildet sind. Alle übrigen Abmessungen und Betrachtungen aus der älteren Ausführung gelten auch für das Beispiel nach Fig. 3, so daß insbesondere die Umfangserstreckung $a_1$, $a_2$ der Rechtecke und der Trapeze (Höhe) und die Umfangserstreckung $b_1$, $b_2$ der Querstege 5, 5' in den beiden Umfangsabschnitten 3, 4 in den beiden Beispielen identisch sind.

Gemäß Fig. 3 liegen zwischen zwei aufeinanderfolgenden Querstegen die trapezförmigen Ausnehmungen in einer Querreihe in der Weise, daß die untere Grundlinie des einen Trapezes der oberen des benachbarten entspricht und umgekehrt. Die Grundlinien von Trapezen benachbarter Querreihen können gegeneinander verschoben sein. An den Reihenenden können Trapeze mit einem senkrechten Schenkel auftreten.

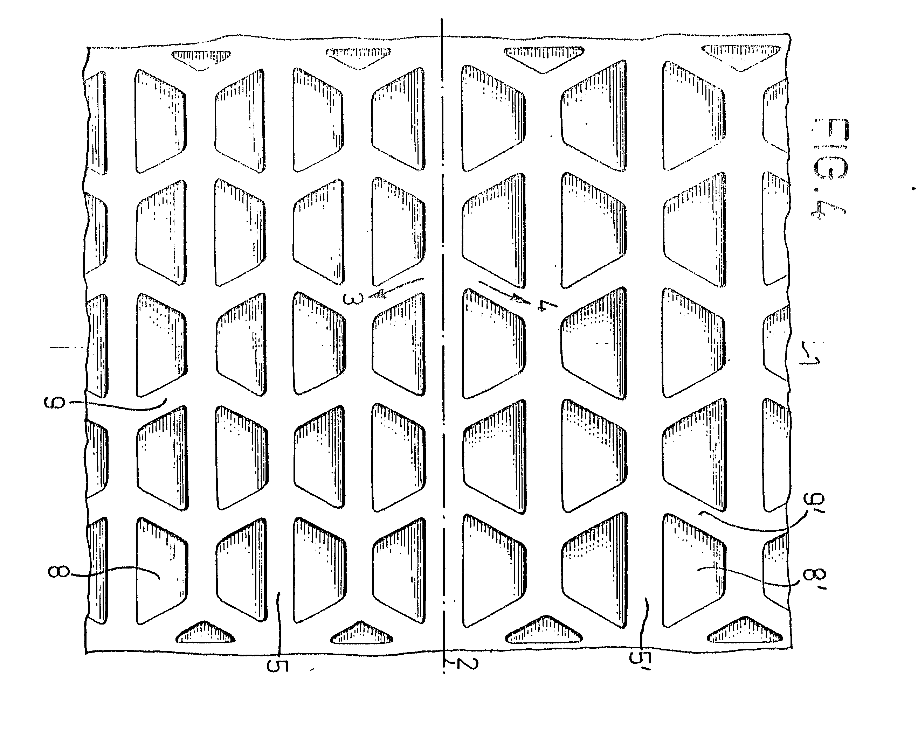

Auch in Fig. 4 liegen trapezförmige Ausnehmungen 8 bzw. 8' vor. Die Trapeze sind jedoch in zwei benachbarten Querreihen spiegelbildlich zueinander angeordnet, wobei die Mittellinie des zwischen ihnen liegenden Querstegs 5 die Symmetrieachse bildet.

Die Grundlinien und Schenkel von Trapezen nebeneinanderliegender Ausnehmungen 8, 8' können auch unterschiedlich lang gewählt sein, so daß der Steigungswinkel der schrägen Stege 9, 9' andere Werte erhält.

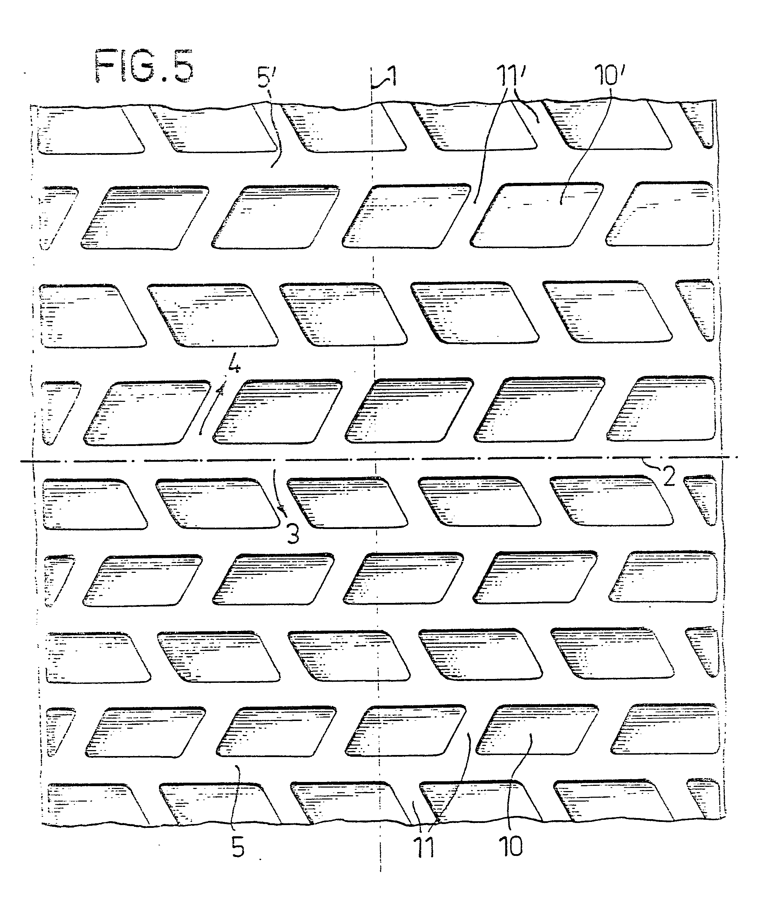

Fig. 5 beschreibt ein Beispiel, bei dem die rechteckförmigen Ausnehmungen 7, 7' der Fig. 1 durch Ausnehmungen 10, 10' mit einem parallelogrammförmigen Grundriß ersetzt sind. Dabei ist selbstverständlich auch der Spezialfall eines rautenförmigen Grundrisses möglich. Die Schenkel in Umfangsrichtung benachbarter Ausnehmungen 10 bzw. 10' und damit die sie begrenzenden Stege 11, 11' wechseln sich in der Steigungsrichtung ab. Es ist jedoch auch eine Ausführung denkbar, bei der sie gleichsteigend verlaufen.

Gemäß einem weiteren Ausführungsbeispiel sind die rechteckförmigen Ausnehmungen 7, 7' nach Fig. 1 durch solche mit dreieckförmigem Grundriß ersetzt, so daß bis auf die zwangsläufige Ausbildung der Umfangsstege 6, 6' als schräge Stege alle Betrachtungen auch hier Gültigkeit haben.

Schließlich ist noch ein Ausführungsbeispiel anzuführen, bei dem die rechteckförmigen Ausnehmungen durch halbkreisförmige ersetzt sind, und zwar in der Weise, daß die gerade Linie eines Halbkreises von der Kante eines Querstegs gebildet wird. Auch sind Kombinationen der dargestellten Ausführungsbeispiele möglich.

**Patentansprüche**

1. Laufflächengestaltung für Fahrzeugluftreifen für Reserveräder, mit in großer Anzahl in Reifenumfangsrichtung nebeneinander und hintereinander angeordneten Ausnehmungen (7, 7' ; 8, 8' ; 10, 10') die quer zur Reifenumfangsrichtung verlaufen, und mit Querstegen (5, 5') und Umfangsstegen (9, 9' ; 11, 11'), die die Ausnehmungen voneinander trennen und eine Breite aufweisen, die etwa 1/4 bis 3/4 der Umfangserstreckung der benachbarten Ausnehmungen entspricht, bei der weiterhin die Ausnehmungen (7, 7', 8, 8', 10, 10') einen Grundriss aufweisen, bei dem zumindest eine Begrenzungslinie von einer Kante eines Querstegs (5, 5') gebildet wird und wobei die radial außenliegende Umfangsfläche des Reifens in mehrere in Umfungsrichtung aufeinanderfolgende Abschnitte (3, 4) unterteilt ist, innerhalb eines jeden Abschnitts (3, 4) die Umfangserstreckung der Ausnehmungen (7, 7') und der Querstege (5, 5') konstant ist und bei den aufeinanderfolgenden Abschnitten (3, 4) die Umfangserstreckung der Ausnehmungen und der Querstege (5, 5') unterschiedlich gewählt ist, dadurch gekennzeichnet, daß die Umfangsstege zumindest teilweise von schräg verlaufenden Stegen (9, 9', 11, 11') gebildet sind.

2. Laufflächengestaltung nach Anspruch 1, dadurch gekennzeichnet, daß zwei Begrenzungslinien einer Ausnehmung (8, 8', 10, 10') von den Kanten der Querstege (5, 5') gebildet werden.

3. Laufflächengestaltung nach Anspruch 2, gekennzeichnet durch Ausnehmungen (8, 8') mit einem trapezförmigen Grundriß.

4. Laufflächengestaltung nach Anspruch 2, gekennzeichnet durch Ausnehmungen (10, 10') mit einem parallelogrammförmigen oder rautenförmigen Grundriß.

5. Laufflächengestaltung nach Anspruch 1, gekennzeichnet durch Ausnehmungen mit einem dreieckförmigen Grundriß.

6. Laufflächengestaltung nach Anspruch 1, gekennzeichnet durch Ausnehmungen mit halbkreisförmigem Grundriß.

7. Laufflächengestaltung nach den Ansprüchen 1 bis 6, gekennzeichnet durch eine Kombination der genannten Ausnehmungen (7, 7'; 8, 8'; 10, 10').

**Claims**

1. Tread pattern for pneumatic vehicle tyres for spare wheels, having recesses (7, 7' ; 8, 8' ; 10, 10') which are disposed in large number adjacent to one another and behind one another in the circumferential direction of the tyre and extend transversely at right angles to the circumferential direction of the tyre, and having transverse webs (5, 5') and circumferential webs (9, 9' ; 11, 11') which separate the recesses from one another and have a width which corresponds substantially to between 1/4 and 3/4 of the circumferential extension of the adjacent recesses, wherein also the recesses (7, 7' ; 8, 8' ; 10, 10') have a configuration whereby at least one boundary line is formed by one edge of a transverse web (5, 5'), and wherein the radially outer circumferential surface of the tyre is divided into a plurality of portions (3, 4) which succeed one another in the circumferential direction, the circumferential extension of the recesses (7, 7') and of the transverse webs (5, 5') being constant within each portion (3, 4) and, for the successive portions (3, 4), the circumferential extension of the recesses and of the transverse webs (5, 5') being variably selected, characterised in that the circumferential webs are at least partially formed from inclinedly extending webs (9, 9' ; 11, 11').

2. Treat pattern according to claim 1, characterised in that two boundary lines of one recess (8, 8' ; 10, 10') are formed by the edges of the transverse webs (5, 5').

3. Tread pattern according to claim 2, characterised by recesses (8, 8') having a trapezoidal configuration.

4. Tread pattern according to claim 2, characterised by recesses (10, 10') having a parallelogram-shaped or diamond-shaped configuration.

5. Tread pattern according to claim 1, characterised by recesses having a triangular configuration.

6. Tread pattern according to claim 1, characterised by recesses having a semi-circular configuration.

7. Tread pattern according to claims 1 to 6, characterised by a combination of said recesses (7, 7' ; 8, 8' ; 10, 10').

**Revendications**

1. Sculpture de surface de roulement pour pneumatiques de véhicules pour roues de secours, comportant des enfoncements (7, 7', 8, 8', 10, 10') disposés en grand nombre l'un à côté de l'autre et l'un derrière l'autre dans la direction périphérique du pneu et courant transversalement par rapport à la direction périphérique du pneu, et comportant des barrettes transversales (5, 5') et des barrettes périphériques (9, 9' ; 11, 11') qui séparent l'un de l'autre les enfoncements et présentent une largeur qui correspond à peu près à 1/4 à 3/4 de l'extension périphérique des enfoncements voisins ; dans laquelle en outre les enfoncements (7, 7' ; 8, 8' ; 10, 10') présentent un contour dont au moins une ligne, qui le limite, est formée par un bord d'une barrette transversale (5, 5') ; et étant précisé que la surface périphérique, située radialement à l'extérieur, du pneu est divisée en plusieurs tronçons (3, 4) qui se suivent dans la direction périphérique, qu'à l'intérieur de chacun des tronçons (3, 4) l'extension périphérique des enfoncements (7, 7') et des barrettes transversales (5, 5') est constante et que l'on choisit différente l'extension périphérique des enfoncements et des barrettes transversales (5, 5') dans les tronçons (3, 4) qui se suivent, caractérisée en ce que les barrettes périphériques sont au moins partiellement formées de barrettes courant obliquement (9, 9' ; 11, 11').

2. Sculpture de surface de roulement selon la revendication 1, caractérisée en ce que deux lignes qui limitent le contour d'un enfoncement (8, 8', 10, 10') sont formées par les bords des barrettes transversales (5, 5').

3. Sculpture de surface de roulement selon la revendication 2, caractérisée par des enfoncements (8, 8') à contour trapézoïdal.

4. Sculpture de surface de roulement selon la revendication 2, caractérisée par des enfoncements (10, 10') à contour en parallélogramme ou en losange.

5. Sculpture de surface de roulement selon la revendication 1, caractérisée par des enfoncements à contour triangulaire.

6. Sculpture de surface de roulement selon la revendication 1, caractérisée par des enfoncements à contour en demi-cercle.

7. Sculpture de surface de roulement selon les revendications 1 à 6, caractérisée par une combinaison des enfoncements mentionnés (7, 7' ; 8, 8' ; 10, 10').

0 076 399

FIG.1

FIG.2

FIG.3

FIG.4

FIG.5